# EUROPEAN PATENT SPECIFICATION

(11) **EP 2 069 111 B1**
(45) Date of publication and mention of the grant of the patent: **18.05.2022**
(21) Application number: 07828647.3
(22) Date of filing: 20.09.2007
(51) Int. Cl.: B25F 5/02

(54) **ADAPTER FOR A POWER TOOL BATTERY PACK**
ADAPTER FÜR EIN BATTERIEPAKET EINES KRAFTFAHRZEUGS
ADAPTATEUR POUR BLOC-BATTERIE D'OUTIL À MOTEUR

(30) Priority: 20.09.2006 JP 2006254998
(43) Date of publication of application: 17.06.2009
(73) Proprietor: Koki Holdings Co., Ltd., Minato-ku Tokyo 1086020 (JP)
(72) Inventor: KONUMA, Yuuichi, Ibaraki 312-8502 (JP); NIYADA, Masateru, Ibaraki 312-8502 (JP); KONNAI, Takuya, Ibaraki 312-8502 (JP)
(74) Representative: Strehl Schübel-Hopf & Partner
(86) International application number: PCT/JP2007/068903
(87) International publication number: WO 2008/035811

(56) References cited:
- US-A1- 2002 125 857
- US-A1- 2005 280 394

## Description

### Technical Field

The invention relates to a cordless power tool, and more particularly to an adapter according to the preamble of claim 1 for mounting a battery pack on the power tool.

### Background Art

Conventionally, cordless power tools have been provided with a detachably mounted battery pack for supplying power to a motor built in the body of the power tool. The battery pack houses rechargeable lithium cells or other secondary batteries.

The battery pack may be mounted onto the body of the power tool by what will be referred to below as an "insertion method" or a "sliding method." In the insertion method, the battery pack is mounted on the body of the power tool by inserting an insertion part protruding from the battery pack into a handle part formed on the body of the power tool. In the sliding method, the battery pack is mounted on the power tool by sliding the battery pack onto the lower end of the handle part in a transverse direction, i.e. a direction orthogonal to the longitudinal dimension of the handle part.

US 2005/0280394 A1 discloses a power tool having an adapter for connecting the battery pack to the body of the power tool. The pre-characterising first part of claim 1 starts out from this prior art. Related art is disclosed in US 2002/125857 A1.

### Disclosure of Invention

### Tehnical Problem

Having two methods for mounting a battery pack on a power tool is inconvenient because a battery pack using the sliding method cannot be mounted on a power tool employing the insertion method.

### Technical Solution

In view of the foregoing, it is an object of the invention to provide an adapter that can be made compact, particularly in the height dimension, and is easy to operate and that enables the use of battery packs employing different mounting methods.

It is another object of the invention to provide an adapter-battery pack assembly, and a power tool employing the adapter described above.

The above objects are solved by the invention as set forth in the appended claims. An embodiment of the invenetion is an adapter that includes:
an insertion part protruding in a first direction and insertable into a body of a power tool, the insertion part having a plurality of terminals for electrically connecting with the power tool;
a pair of rails that guides a battery pack to move in a second direction substantially orthogonal to the first direction for mounting the battery pack;
a tool-latching device for attaching to and detaching from the body of the power tool; and
a battery-latching device for attaching to and detaching from the battery pack. The tool-latching device and the battery-latching device are disposed in different positions when viewing the adapter in the first direction.

The adapter-battery pack assembly according to an embodiment of the invention includes an adapter and a battery pack. The adapter includes:
an insertion part protruding in a first direction and insertable into a body of a power tool, the insertion part having a plurality of terminals for electrically connecting with the power tool;
a pair of rails that guides a battery pack to move in a second direction substantially orthogonal to the first direction for mounting the battery pack;
an operating part for attaching the adapter to and detaching the adapter from the body of the power tool; and
a receiving part for attaching the adapter to and detaching the adapter from the battery pack.

The battery pack includes:
a battery case accommodating a battery;
a pair of rail grooves formed in the battery case for inserting the pair of rails; and
a battery-side operating part engageable with the receiving part. The operating part of the adapter and the receiving part are disposed in different positions when viewing the adapter in the first direction of the insertion part.

A power tool according to an embodiment of the invention includes:
a motor;
a battery pack serving as a power source for the motor;
an accommodating section that opens outward;
an electric connector disposed adjacent the accommodating section; and
an adapter that supplies power from the battery pack to the motor, the adapter comprising: an insertion part that is inserted into the accommodating section and has a plurality of terminals for electrically connecting with the power tool; a pair of rails that guides insertion of the battery pack in a direction substantially orthogonal to the insertion direction of the insertion part; an operating part that attaches the insertion part in and detaching the insertion part from the accommodating section; and a receiving part for attaching to and detaching from the battery pack. The operating part and the receiving side are disposed in different positions when viewing the adapter in the insertion direction of the insertion part.

The adapter according to the invention is preferably configured from a base part having a pair of first side walls disposed in substantially confronting relation with each other and a pair of second side walls disposed in substantially confronting relation with each other and connecting the pair of first side walls. The operating part of the adapter serving as a tool-latching device is configured to engage a receiving part provided in the body of the power tool. A receiving part serving as a battery-latching device is configured to engage an operating part provided in the battery pack. The operating part and the receiving part are disposed on different walls of the pair of first side walls and the pair of second side walls.

One operating part of the tool-latching device may be disposed on one of the pair of second side walls, and one receiving part of the battery-latching device may be formed in each of the pair of first side walls.

Alternatively, one receiving part of the battery-latching device may be formed in one of the pair of second side walls, and one operating part of the tool-latching device may be disposed on each of the pair of first side walls.

Preferably, operation of the operating part of the tool-latching device detaches the adapter from the body of the power tool. Similarly, operation of the operating part of the battery pack detaches the adapter from the battery pack.

### Advantageous Effects

With the invention described above, the adapter enables the use of battery packs having different mounting methods. Further, since the operating part of the tool-latching device and the receiving part of the battery-latching device are disposed at different positions when viewed along the insertion direction of the insertion part on the adapter, the operating part and the receiving part do not overlap vertically (along the insertion direction of the insertion part), making it possible to reduce the height of the adapter to form a more compact construction and improving the ease of operating the operating parts of the tool-latching device and the battery-latching device, respectively.

### Brief Description of Drawings

Fig. 1 is a perspective view showing one example a power tool to which the invention is applied;
Fig. 2 is a perspective view showing an adapter according to a first mode of the invention from a position obliquely beneath the adapter;
Fig. 3 is an exploded perspective view showing a battery pack with attached adapter according to the first mode of the invention;
Fig. 4 is a perspective view showing the battery pack with attached adapter according to the first mode of the invention;
Fig. 5 is a front view showing the battery pack with attached adapter according to the first mode of the invention;
Fig. 6 is a plan view showing the battery pack with attached adapter according to the first mode of the invention;
Fig. 7 is a side view showing the battery pack with attached adapter according to the first mode of the invention;
Fig. 8 is a cross-sectional view showing the adapter taken along the line A-A in Fig. 7;
Fig. 9 is a cross-sectional view showing the adapter taken along the line B-B in Fig. 7;
Fig. 10 is a front view showing a battery pack with an attached adapter according to a second mode of the invention;
Fig. 11 is a plan view showing a battery pack with an attached adapter according to the second mode of the invention;
Fig. 12 is a side view showing a battery pack with an attached adapter according to the second mode of the invention;
Fig. 13 is a side view illustrating a method of mounting the adapter on the battery pack according to the second mode of the invention;
Fig. 14 is a front view showing a battery pack with an attached adapter according to a third mode of the invention;
Fig. 15 is a plan view showing a battery pack with an attached adapter according to the third mode of the invention;
Fig. 16 is a side view showing a battery pack with an attached adapter according to the third mode of the invention; and
Fig. 17 is a side view illustrating a method of mounting the adapter on the battery pack according to the third mode of the invention.

### Explanation of Reference

1 Power tool (power drill)
2 Housing
2A Main body part
2B Handle part
3 Drill chuck
4 Adapter-battery pack assembly
5 Trigger switch
6 Sliding-type battery pack
6A Battery case
6B Connector
6a Front wall
6b Rear wall
6c Left wall
6d Right wall
6e Terminal insertion part
6f Rib
6g Engaging groove
7 Adapter
7A Base part
7B Insertion part
7a Front wall
7b Rear wall
7c Left wall
7d Right wall
7e Rail
7f Groove
8 Tool-latching device
8A Operating part
8a Pressing part
8b Latch pawl
8c Spring
8d Slider
9 Battery latching device
9A Operating part
9B Receiving part
9a pressing part
9b Latch pawl
9c Spring
10 Terminals

### Best Mode for Carrying Out the Invention

Next, preferred modes of the invention will be described while referring to the accompanying drawings.

### Mode for the Invention 1

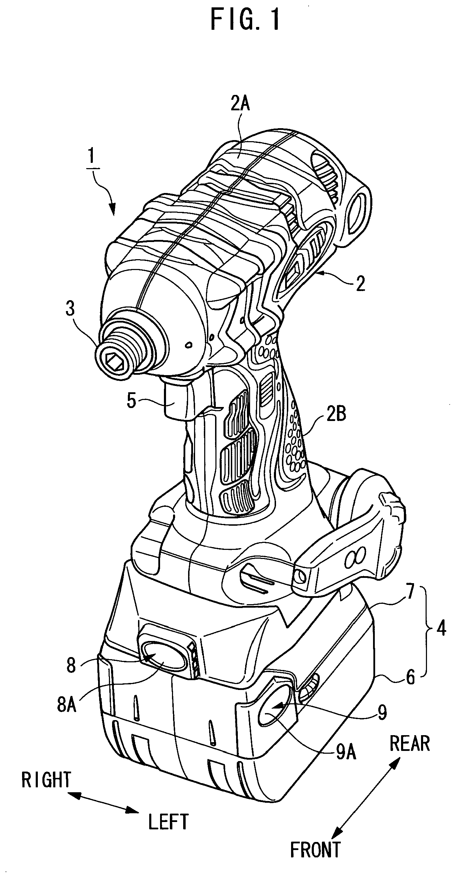

First, the first mode of the invention will be described with reference to Figs. 1 to 9.

Fig. 1 is a perspective view showing a power drill 1 as one example of a power tool to which the invention is applied. The power drill 1 has a housing 2 that is T-shaped in a side view. The housing 2 includes a main body part 2A and a handle part 2B extending substantially at a right angle to the main body part 2A. The main body part 2A accommodates a motor (not shown) serving as a drive source. A drill chuck 3 for holding a tip tool or drill bit (not shown) is rotatably provided on the front side of the main body part 2A. The drill bit is detachably mounted in the drill chuck 3.

An adapter-battery pack assembly 4 is detachably mounted on the lower end of the handle part 2B in Fig. 1. A trigger switch 5 is disposed on the front upper end of the handle part 2B where the handle part 2B connects to the main body part 2A.

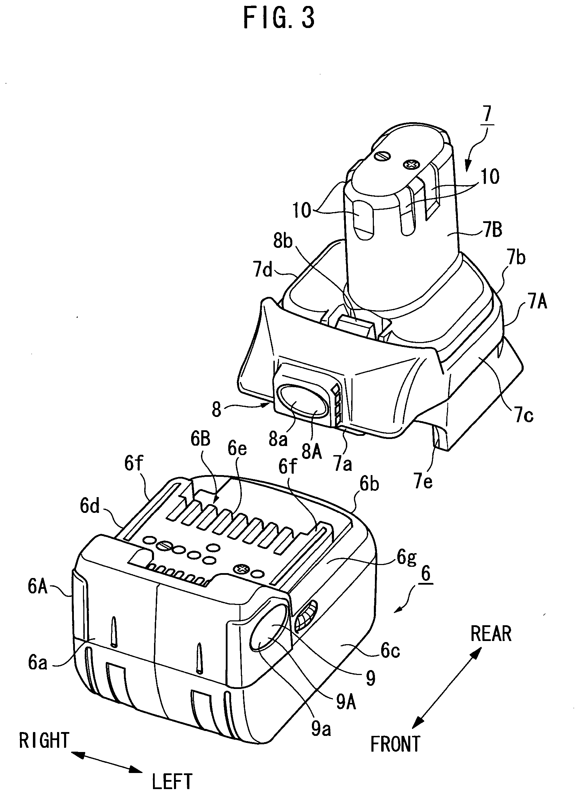

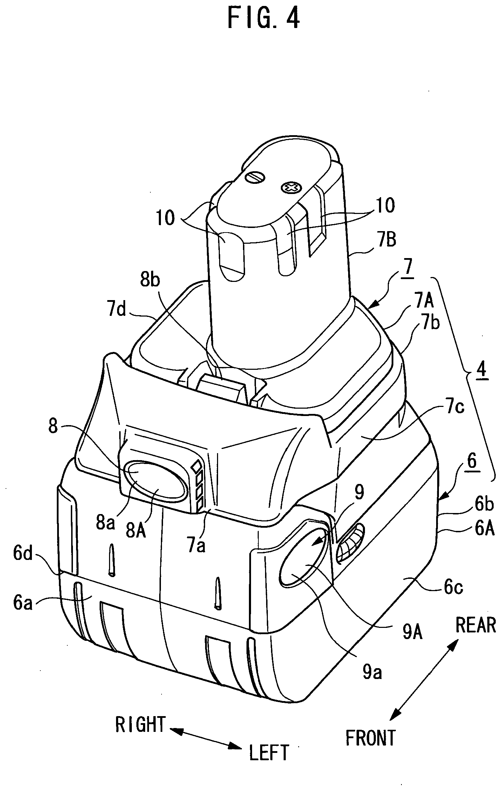

Fig. 3 is an exploded perspective view and Fig. 4 is a perspective view both showing the adapter-battery pack assembly 4 according to the first mode of the invention. As is illustrated in Figs. 3 and 4, the adapter-battery pack assembly 4 is constructed by detachably mounting an adapter 7 on a sliding-type battery pack 6 using the sliding method.

The power drill 1, to which the first mode of the invention is applied, is intended to be used by mounting an insertion type battery pack (not shown) into the lower end of the handle part 2B. Here, an outward-opening accommodating space (not shown) is formed in the lower end of the handle part 2B. Although not shown in the drawings, an electrical connector having a plurality of terminals is provided in the back inside part of the accommodating space.

To operate the power drill 1 powered by an insertion-type battery pack (not shown) with the sliding-type battery pack 6, the adapter 7 is used to mount the battery pack 6 in the power drill 1. To do this, the adapter 7 is first mounted on the handle part 2B of the power drill 1, and the battery pack 6 is subsequently mounted on the adapter 7 according to the sliding method. Alternatively, the adapter-battery pack assembly 4 may be constructed by mounting the adapter 7 on the battery pack 6, as shown in Fig. 4 and subsequently mounted on the handle part 2B of the power drill 1 according to the insertion method.

As shown in Fig. 1, a tool-latching device 8 is used to mount the adapter 7 or the adapter-battery pack assembly 4 on the handle part 2B of the power drill 1, and a battery-latching device 9 is used to mount the adapter 7 on the battery pack 6.

Next, the structure of the adapter 7 will be described.

Integrally molded of resin, the adapter 7 includes a base part 7A having a substantially rectangular parallelepiped shape, and an insertion part 7B having an elliptical cylinder shape that protrudes from the top surface of the base part 7A in the rear portion thereof. The insertion part 7B is inserted from the lower end of the handle part 2B of the power drill 1 into the accommodating space (not shown) formed in the handle part 2B. The insertion part 7B accommodates a circuit board (not shown) in a vertical orientation. Terminals 10 leading to the circuit board are exposed around the top outer periphery of the insertion part 7B. When the insertion part 7B is inserted into the accommodating space in the handle part 2B, the terminals 10 connect with the terminals on the electrical connector provided in the back of the accommodating space.

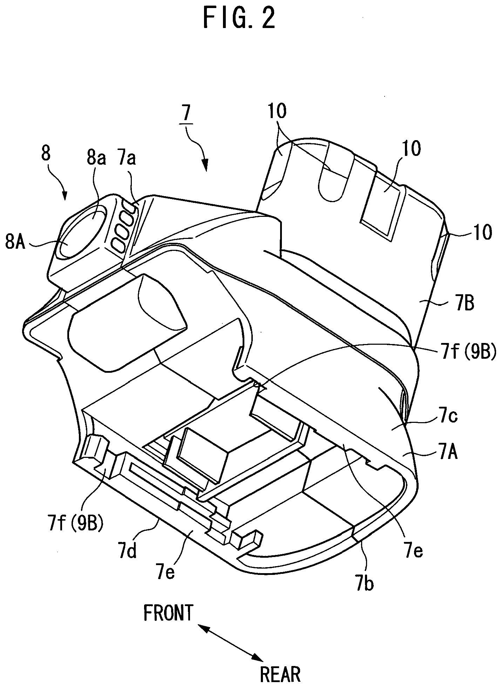

The outer periphery of the base part 7A on the adapter 7 is formed of first side walls and second side walls. The first side walls include a front wall 7a and a rear wall 7b disposed in substantially confronting relation with each other. The second side walls include a left wall 7c and a right wall 7d disposed in substantially confronting relation with each other. The left wall 7c and the right wall 7d, i.e., the second side walls, connect the front wall 7a and rear wall 7b, i.e., the first side walls. As shown in Fig. 2, a depression is formed in the bottom surface of the base part 7A, and a pair of rails 7e extends parallel to each other in the front-to-rear direction along the bottoms of the left and right walls 7c and 7d. The left and right rails 7e function both to guide the battery pack 6 when the battery pack 6 is mounted on the adapter 7 according to the sliding method and to engage the battery pack 6 so as to prevent the battery pack 6 from coming off the adapter 7.

The tool-latching device 8 has an operating part 8A provided on the adapter 7, while the battery-latching device 9 has a pair of receiving parts 9B also provided on the adapter 7. The operating part 8A of the tool-latching device 8 and the receiving parts 9B of the battery-latching devices 9 are disposed at different positions on the adapter 7 when viewed along the insertion direction for inserting the adapter 7 into the handle part 2B of the power drill 1 (plan view).

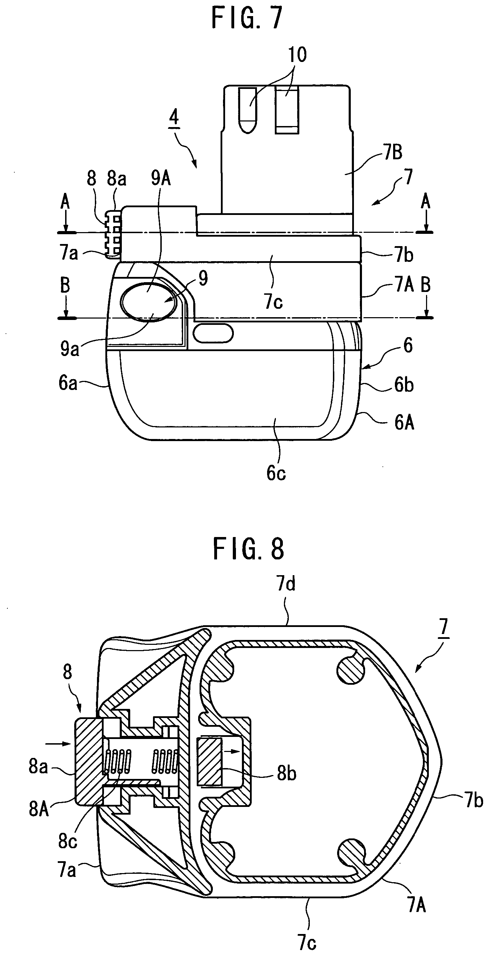

More specifically, the operating part 8A of the tool-latching device 8 is disposed on the front wall 7a of the base part 7A. Fig. 7 is a side view showing the adapter-battery pack assembly 4, and Fig. 8 is a cross-sectional view of the adapter-battery pack assembly 4 taken along the line A-A in Fig. 7. As shown in Fig. 8, the operating part 8A includes a pressing part 8a capable of sliding in the front-to-rear direction as indicated by an arrow, a latch pawl 8b erected vertically from the rear end of the pressing part 8a, and a spring 8c for urging the pressing part 8a and the latch pawl 8b forward (leftward in Fig. 8).

A total of two receiving parts 9B of the battery-latching device 9 are provided, with one each extending along the left and right walls 7c and 7d of the base part 7A. As shown in Fig. 2, the receiving parts 9B are formed from rectangular engaging grooves 7f formed in the inner sides of the rails 7e near the front ends thereof on the bottom surface of the base part 7A.

Next, the structure of the battery pack 6 will be described in detail.

As best shown in Fig. 3, the battery pack 6 has a battery case 6A molded of resin substantially in a rectangular parallelepiped shape. The battery pack 6 accommodates a plurality of rechargeable battery cells (not shown), such as lithium ion cells. On the outer periphery of the battery case 6A are formed a front wall 6a, a rear wall 6b, a left wall 6c and a right wall 6d. The left wall 6c and the right wall 6d connect the front wall 6a and rear wall 6b.

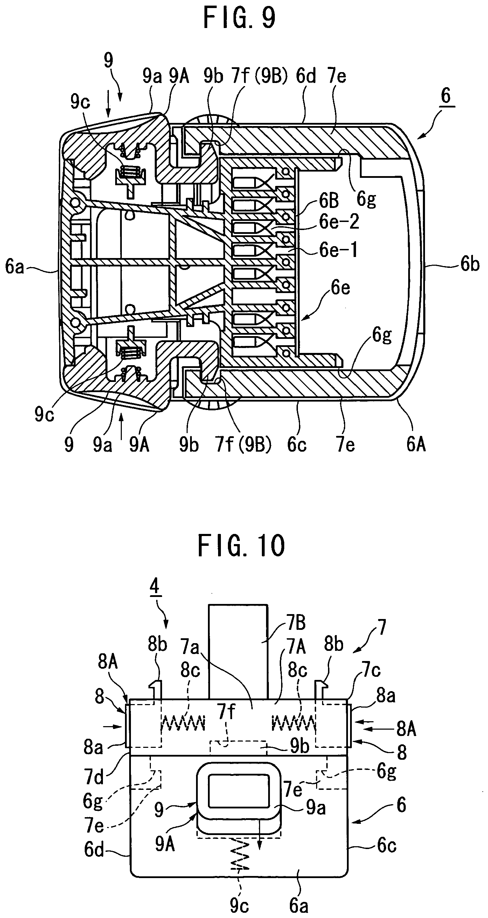

A connector 6B is provided on the top surface of the battery case 6A. Referring to Fig. 3 and Fig. 9 that is a cross-sectional view of the adapter taken along the line B-B in Fig. 7, the connector 6B includes a terminal insertion part 6e, and a pair of left and right ribs 6f. The terminal insertion part 6e is provided with a plurality of slots 6e-1 opening rearward (rightward in Fig. 9), each of which accommodates a terminal 6e-2. The left and right ribs 6f extend parallel to each other in the front-to-rear direction along the left wall 6c and right wall 6d of the battery case 6A. Engaging grooves 6g having a rectangular cross section are formed parallel to each other along the front-to-rear direction between the top surface of the battery case 6A and the left and right ribs 6f.

The battery-latching device 9 has a total of two operating parts 9A provided on the battery pack 6, with one each on the left and right walls 6c and 6d of the battery case 6A. As shown in Fig. 9, each of the operating parts 9A includes a pressing part 9a operated by pushing in a transverse direction, indicated by an arrow in Fig. 9, a latch pawl 9b having a hook-shape extending from the pressing part 9a that is bent to form three sides of a rectangle in a plan view, and a spring 9c for urging the pressing part 9a outward. The latch pawl 9b protrudes into the respective engaging groove 6g of the battery pack 6 while the pressing part 9a is not being pressed and is retracted from the engaging groove 6g when the pressing part 9a is pressed.

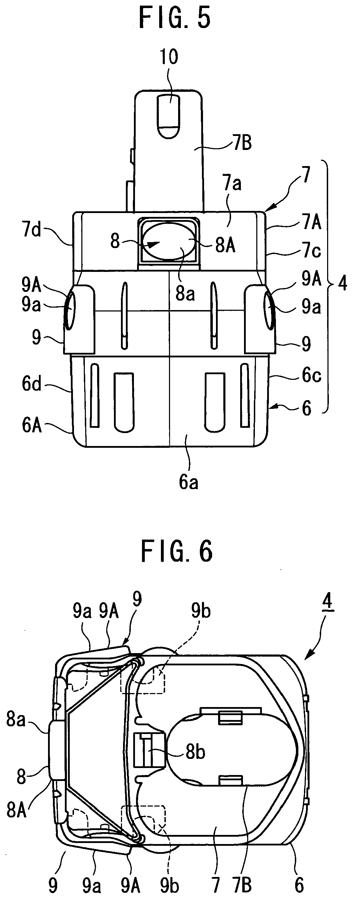

The adapter 7 is coupled with the battery pack 6 by fitting the rails 7e of the adapter 7 into the engaging grooves 6g of the battery pack 6 from the rear side, sliding the adapter 7 forward in this state, and engaging the rails 7e in the engaging grooves 6g. As shown in Fig. 9, the latch pawls 9b have tapered surfaces so that when the front ends of the rails 7e contact the latch pawls 9b and slide over the tapered surfaces formed on the latch pawls 9b, the latch pawls 9b retract inward, allowing the adapter 7 to slide forward. When the engaging grooves 7f formed in the rails 7e become aligned with the latch pawls 9b on the battery pack 6 side, the restoring force in the latch pawls 9b push the latch pawls 9b back outward so that the latch pawls 9b engage in the engaging grooves 7f. In this way, the adapter 7 is reliably mounted on the battery pack 6, completing assembly of the adapter-battery pack assembly 4 shown in Fig. 4. Fig. 5 is a front view, Fig. 6 is a plan view, and Fig. 7 is a side view of the adapter-battery pack assembly 4 shown in Fig. 4.

After mounting the adapter 7 on the battery pack 6 to assemble the adapter-battery pack assembly 4, as described above, the adapter-battery pack assembly 4 is mounted on the bottom end of the handle part 2B by inserting the insertion part 7B on the top side of the adapter 7 into the accommodating space formed in the bottom of the handle part 2B. At this time, the latch pawl 8b on the operating part 8A of the tool-latching device 8 provided on the adapter 7 engages in an engaging groove (not shown) on the power drill 1 side to prevent the adapter-battery pack assembly 4 from coming off the power drill 1. Further, the terminals 10 provided around the insertion part 7B of the adapter 7 are connected to the plurality of terminals on the electrical connector (not shown) provided in the accommodating space of the handle part 2B, enabling the battery pack 6 to supply power to the power drill 1.

The power drill 1 is turned on by operating the trigger switch 5 provided thereon, at which time the battery pack 6 supplies power to the motor (not shown) for driving the same. The rotation of the motor is transmitted to the drill chuck 3 via a transmitting mechanism (not shown), driving the drill chuck 3 and a drill bit (not shown) mounted in the drill chuck 3 to rotate for driving a screw.

The adapter-battery pack assembly 4 can be removed from the power drill 1 simply by pressing the pressing part 8a of the operating part 8A against the urging force of the spring 8c rearward, as indicated by the arrow in Fig. 8. Since the latch pawl 8b moves together with the pressing part 8a in the same direction at this time, the latch pawl 8b disengages from the engaging groove (not shown) on the power drill 1 side, allowing the adapter-battery pack assembly 4 to be removed from the power drill 1. Since the operating part 8A of the tool-latching device 8 provided on the adapter 7 is disposed in a different position from the operating parts 9A of the battery-latching devices 9 provided on the battery pack 6 when viewing the adapter 7 along the direction for inserting the adapter-battery pack assembly 4 into the power drill 1, the operating part 8A and operating parts 9A can be made large to ensure that they are easy to operate. Further, this arrangement reduces the likelihood of the operating parts 9A on the battery-latching devices 9 being operated accidentally.

Further, in the adapter-battery pack assembly 4 described above, the adapter 7 can be removed from the battery pack 6 simply by pressing the operating parts 9a of the operating parts 9A inward against the urging force of the springs 9c, as indicated by the arrows in Fig. 9. Since the latch pawls 9b move together with the respective operating parts 9a in the same direction at this time, the latch pawls 9b disengage from the engaging grooves 7f on the adapter 7 side, enabling the adapter 7 to be removed from the battery pack 6. When removing the adapter-battery pack assembly 4 from the power drill 1, the configuration of the power drill 1 makes it less likely for the operating part 8A of the tool-latching device 8 to be operated accidentally.

Another method of using the power drill 1 is to first mount the adapter 7 on the handle part 2B of the power drill 1 and subsequently mount the battery pack 6 on the adapter 7. However, the steps for mounting the adapter 7 in the power drill 1 and the battery pack 6 on the adapter 7 and the steps for removing the adapter-battery pack assembly 4 from the power drill 1 are essentially identical to those described above.

With the structure according to the first mode of the invention described above, battery packs 6 using different mounting systems can be mounted on the same power drill 1 via the adapter 7. Accordingly, the structure of the first mode of the invention can easily support different mounting methods.

Further, by disposing the operating part 8A of the tool-latching device 8 in a different position from the operating parts 9A of the battery-latching devices 9 when viewed along the direction in which the insertion part 7B of the adapter 7 is inserted, the structure according to the first mode of the invention reduces the likelihood of a user operating the wrong operating part, thereby achieving high operability for the operating part 8A and operating parts 9A.

### Mode for the Invention 2

Next, a second mode of the invention will be described with reference to Figs. 10 through 13, wherein like parts and components are designated with the same reference numerals to avoid duplicating description.

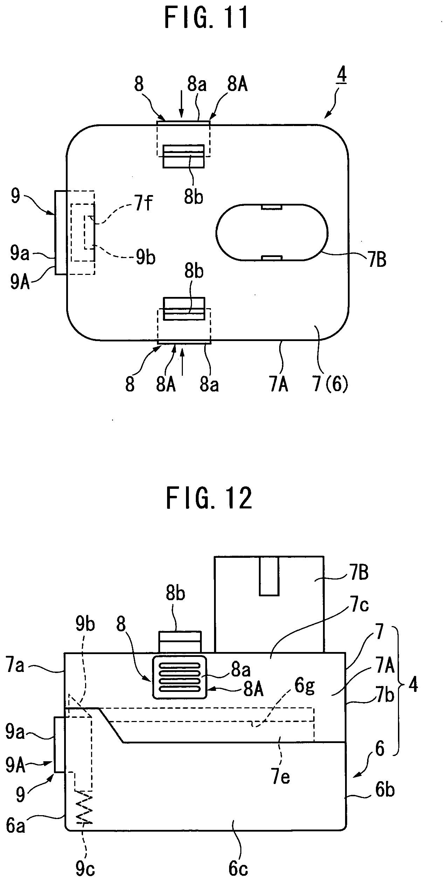

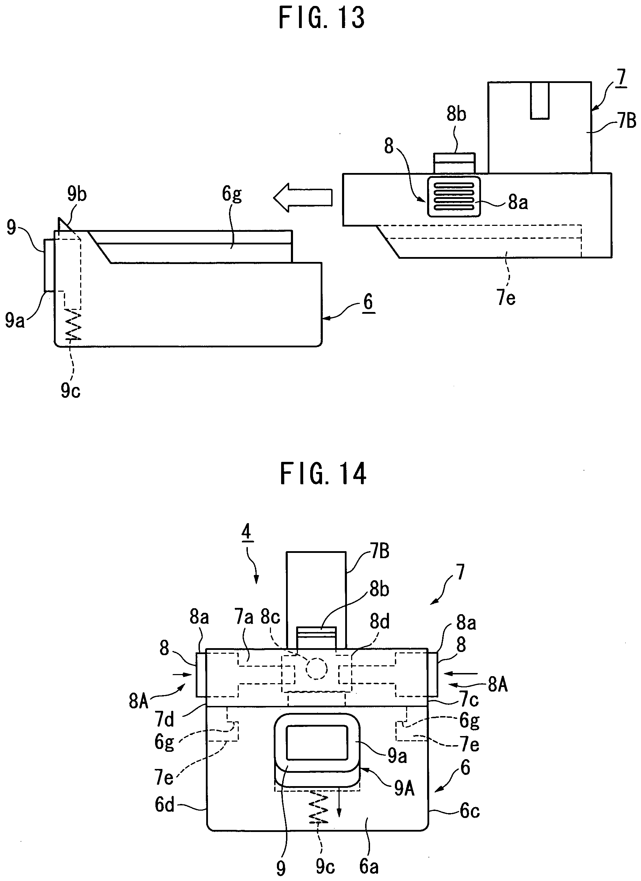

Fig. 10 is a front view, Fig. 11 is a plan view, and Fig. 12 is a side view of a battery pack with an attached adapter according to a second mode of the invention. Fig. 13 is a side view illustrating a method of mounting the adapter on the battery pack.

In the second mode of the invention, operating parts 8A of two tool-latching devices 8 and a receiving part 9B of one battery-latching device 9 are provided on the adapter 7 and are disposed in different positions when viewing the adapter 7 in a plan view, i.e. along the direction in which the adapter 7 is inserted into the power drill 1.

More specifically, as shown in Figs. 10 and 11, the operating parts 8A of the tool-latching devices 8 are provided on the base part 7A of the adapter 7, one on each of the left and right walls 7c and 7d. Each of the operating parts 8A includes a pressing part 8a capable of sliding in a transverse direction, a latch pawl 8b erected vertically from an inner end of the pressing part 8a, and a spring 8c for urging the pressing part 8a and the latch pawl 8b outward (leftward and rightward, respectively, in Fig. 10) .

The receiving part 9B of the battery-latching device 9 is disposed on the front wall 7a of the base part 7A and is configured of a rectangular engaging groove 7f formed in the bottom surface of the base part 7A at the front end thereof.

The operating part 9A of the battery-latching device 9 is provided on the front wall 6a of the battery pack 6. The operating part 9A includes a pressing part 9a operated by pushing downward, as indicated by the arrow in Fig. 10, a latch pawl 9b having a hook shape extending vertically from the top endface of the pressing part 9a, and a spring 9c for urging the pressing part 9a upward.

The adapter 7 is coupled with the battery pack 6 by fitting the rails 7e of the adapter 7 into the engaging grooves 6g of the battery pack 6 from the rear side, sliding the adapter 7 forward in this state, as indicated by the arrow in Fig. 13, and engaging the rails 7e in the engaging grooves 6g. As shown in Fig. 12, the latch pawl 9b has a tapered surface so that when the front end of the adapter 7 contacts the latch pawl 9b and slides over the tapered surface formed on the latch pawl 9b, the latch pawl 9b moves downward against the urging force of the spring 9c, allowing the adapter 7 to slide forward. When the engaging groove 7f formed in the adapter 7 becomes aligned with the latch pawl 9b on the battery pack 6 side, the urging force of the spring 9c pushes the latch pawl 9b upward so that the latch pawl 9b engages in the engaging groove 7f. In this way, the adapter 7 is reliably mounted on the battery pack 6, completing assembly of the adapter-battery pack assembly 4 shown in Figs. 10 through 12.

After mounting the adapter 7 on the battery pack 6 to assemble the adapter-battery pack assembly 4, as described above, the adapter-battery pack assembly 4 is mounted on the bottom end of the handle part 2B by inserting the insertion part 7B on the top side of the adapter 7 into the accommodating space formed in the bottom of the handle part 2B. At this time, the latch pawls 8b on the operating parts 8A of the left and right tool-latching devices 8 provided on the adapter 7 engage in engaging grooves (not shown) on the power drill 1 side to prevent the adapter-battery pack assembly 4 from coming off the power drill 1 and enable the battery pack 6 to supply power to the power drill 1.

The adapter-battery pack assembly 4 can be removed from the power drill 1 simply by pressing the operating parts 8a of the operating parts 8A inward against the urging force of the springs 8c, as indicated by the arrows in Fig. 11. Since the latch pawls 8b move together with the operating parts 8a in the same direction at this time, the latch pawls 8b disengage from the engaging grooves (not shown) on the power drill 1 side, allowing the adapter-battery pack assembly 4 to be removed from the power drill 1. Since the operating parts 8A of the tool-latching devices 8 provided on the adapter 7 are disposed in different positions from the operating part 9A of the battery-latching device 9 provided on the battery pack 6 when viewing the adapter 7 along the direction for inserting the adapter-battery pack assembly 4 into the power drill 1, the operating parts 8A and operating part 9A can be made large to ensure that they are easy to operate. Further, this arrangement reduces the likelihood of the operating part 9A on the battery-latching device 9 being operated accidentally.

Further, the adapter 7 can be removed from the adapter-battery pack assembly 4 simply by pressing the pressing part 9a of the operating part 9A downward against the urging force of the spring 9c, as indicated by the arrow in Fig. 10. Since the latch pawl 9b moves together with the pressing part 9a in the same direction at this time, the latch pawl 9b disengages from the engaging groove 7f on the adapter 7 side, enabling the adapter 7 to be removed from the battery pack 6. When removing the adapter-battery pack assembly 4 from the power drill 1, the configuration of the power drill 1 makes it less likely for the operating parts 8A of the tool-latching devices 8 to be operated accidentally.

In the second mode of the invention described above, battery packs 6 using different mounting systems can be mounted on the same power drill 1 via the adapter 7. Accordingly, the structure of the preferred mode of the invention can easily support different mounting methods.

Further, by disposing the operating parts 8A of the tool-latching devices 8 in different position from the operating part 9A of the battery-latching device 9 when viewed along the direction in which the insertion part 7B of the adapter 7 is inserted, the structure according to the second mode of the invention reduces the likelihood of a user operating the wrong operating part, thereby achieving high operability for the operating parts 8A and operating part 9A.

### Mode for the Invention 3

Next, a third mode of the invention will be described with reference to Figs. 14 through 17, wherein like parts and components are designated with the same reference numerals to avoid duplicating description.

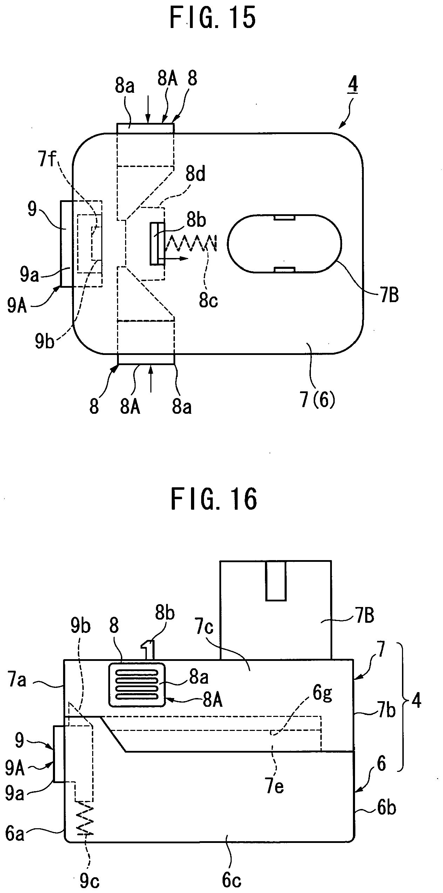

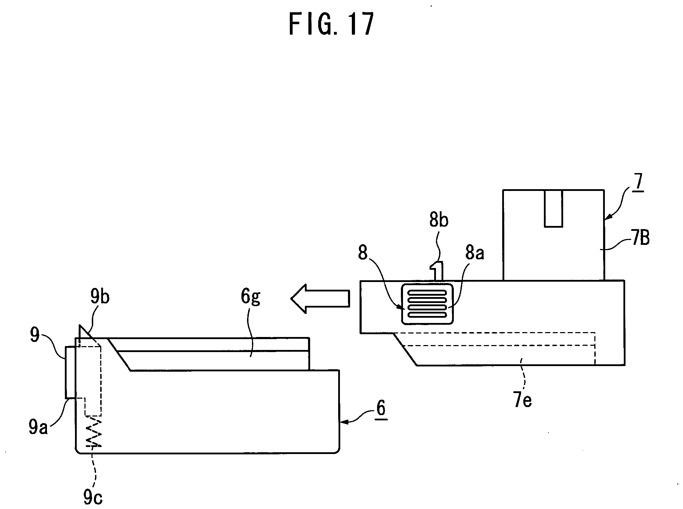

Fig. 14 is a front view, Fig. 15 is a plan view, and Fig. 16 is a side view of a battery pack with an attached adapter according to the third mode of the invention. Fig. 17 is a side view illustrating a method of mounting the adapter on the battery pack according to the third mode of the invention.

In the third mode of the invention, operating parts 8A of two tool-latching devices 8 and a receiving part 9B of one battery-latching device 9 are provided on the adapter 7 and are disposed in different positions when viewing the adapter 7 in a plan view, i.e. along the direction in which the adapter 7 is inserted into the power drill 1.

More specifically, as shown in Fig. 15, the operating parts 8A of the tool-latching devices 8 are provided on the base part 7A of the adapter 7, one on each of the left and right walls 7c and 7d. Each of the operating parts 8A includes a pressing part 8a capable of sliding in a transverse direction and having a tapered surface on the inner endface. The two operating parts 8A share a slider 8d that contacts the tapered surfaces of both operating parts 8a and is capable of sliding forward and rearward, a latch pawl 8b erected vertically from a rear end of the slider 8d, and a spring 8c for urging the slider 8d and the latch pawl 8b forward (leftward in Fig. 15).

As in the second mode of the invention, the receiving part 9B of the battery-latching device 9 is disposed on the front wall 7a of the base part 7A and is configured of a rectangular engaging groove 7f formed in the bottom surface of the base part 7A at the front end thereof.

As in the second mode of the invention, the operating part 9A of the battery-latching device 9 is provided on the front wall 6a of the battery pack 6. The operating part 9A includes a pressing part 9a operated by pushing downward, as indicated by the arrow in Fig. 14, a latch pawl 9b having a hook shape extending vertically from the top endface of the pressing part 9a, and a spring 9c for urging the pressing part 9a and latch pawl 9b upward.

The adapter 7 is coupled with the battery pack 6 by fitting the left and right rails 7e into the left and right engaging grooves 6g of the battery pack 6 from the rear side, sliding the adapter 7 forward in this state, as indicated by the arrow in Fig. 17, and engaging the rails 7e in the engaging grooves 6g. As shown in Fig. 16, the latch pawl 9b has a tapered surface so that when the front end of the adapter 7 contacts the latch pawl 9b and slides over the tapered surface formed on the latch pawl 9b, the latch pawl 9b moves downward against the urging force of the spring 9c, allowing the adapter 7 to slide forward. When the engaging groove 7f formed in the adapter 7 becomes aligned with the latch pawl 9b on the battery pack 6 side, the urging force of the spring 9c pushes the latch pawl 9b upward so that the latch pawl 9b engages in the engaging groove 7f. In this way, the adapter 7 is reliably mounted on the battery pack 6, completing assembly of the adapter-battery pack assembly 4 shown in Figs. 14 through 16.

After mounting the adapter 7 on the battery pack 6 to assemble the adapter-battery pack assembly 4, as described above, the adapter-battery pack assembly 4 is mounted on the bottom end of the handle part 2B by inserting the insertion part 7B on the top side of the adapter 7 into the accommodating space formed in the bottom of the handle part 2B. At this time, the latch pawl 8b of the operating parts 8A engage in an engaging groove (not shown) formed in the power drill 1 side to prevent the adapter-battery pack assembly 4 from coming off the power drill 1 and to enable the battery pack 6 to supply power to the power drill 1.

The adapter-battery pack assembly 4 can be removed from the power drill 1 simply by pressing the operating parts 8a of the operating parts 8A inward against the urging force of the spring 8c, as indicated by the arrows in Fig. 15. Since the slider 8d contacting the tapered surfaces of the operating parts 8a slides rearward (rightward in Fig. 15) against the urging force of the spring 8c at this time due to the wedge effect, the latch pawl 8b formed integrally with the slider 8d moves in the same direction. Accordingly, latch pawl 8b disengages from the engaging groove (not shown) on the power drill 1 side, allowing the adapter-battery pack assembly 4 to be removed from the power drill 1. Since the operating parts 8A of the tool-latching devices 8 provided on the adapter 7 are disposed in different positions from the operating part 9A of the battery-latching device 9 provided on the battery pack 6 when viewing the adapter 7 along the direction for inserting the adapter-battery pack assembly 4 into the power drill 1, the operating parts 8A and operating part 9A can be made large to ensure that they are easy to operate. Further, this arrangement reduces the likelihood of the operating part 9A on the battery-latching device 9 being operated accidentally.

Further, as in the second mode of the invention described above, the adapter 7 can be removed from the adapter-battery pack assembly 4 simply by pressing the pressing part 9a of the operating part 9A downward against the urging force of the spring 9c, as indicated by the arrow in Fig. 14. Since the latch pawl 9b moves together with the pressing part 9a in the same direction at this time, the latch pawl 9b disengages from the engaging groove 7f on the adapter 7 side, enabling the adapter 7 to be removed from the battery pack 6. When removing the adapter-battery pack assembly 4 from the power drill 1, the configuration of the power drill 1 makes it less likely for the operating parts 8A of the tool-latching devices 8 to be operated accidentally.

In the third mode of the invention described above, battery packs 6 using different mounting systems can be mounted on the same power drill 1 via the adapter 7. Accordingly, the structure of the third mode of the invention can easily support different mounting methods.

Further, by disposing the operating parts 8A of the tool-latching devices 8 in different position from the operating part 9A of the battery-latching device 9 when viewed along the direction in which the insertion part 7B of the adapter 7 is inserted, the structure according to the third mode of the invention reduces the likelihood of a user operating the wrong operating part, thereby achieving high operability for the operating parts 8A and operating part 9A.

### Industrial Applicability

An adapter of the invention can be used in conjunction with a cordless power tool and enables the cordless power tool to use battery packs of different mounting type.

## Claims

1. An adapter (7) for a power tool, comprising:
an insertion part (7B) protruding in an insertion direction and insertable into a body of the power tool in the insertion direction, the insertion part (7B) having a plurality of terminals (10) for electrically connecting with the power tool;
a pair of rails (7e) that guides a battery pack (6) to move in a front-rear direction substantially orthogonal to the insertion direction, for mounting the battery pack (6) on the adapter (7), the pair of rails (7e) being configured to be inserted in engaging grooves (6g) of the battery pack (6);
a tool-latching device (8) for attaching to and detaching from the body of the power tool; and
a battery-latching device (9, 9B) for attaching to and detaching from the battery pack (6),
**characterised in that**
the tool-latching device (8) and the battery-latching device (9, 9B) are disposed in different positions when viewing the adapter in the insertion direction, in which the adapter (7) is inserted into the body of the power tool.

2. The adapter according to claim 1, further comprising a base part (7A) having a pair of first side walls (7c, 7d) disposed in substantially confronting relation with each other and a pair of second side walls (7a, 7b) disposed in substantially confronting relation with each other and connecting the pair of first side walls, wherein the tool-latching device (8) comprises an operating part (8A) capable of engaging a receiving part provided in the body of the power tool, and the battery-latching device (9) comprises a receiving part (9B) with which an operating part (9A) provided in the battery pack (6) is engageable, the operating part of the tool-latching device and the receiving part of the battery-latching device being disposed on different walls of the pair of first side walls and the pair of second side walls.

3. The adapter according to claim 2, wherein one operating part (8A) of the tool-latching device (8) is disposed on one (7a) of the pair of second side walls (7a, 7b), and one receiving part (9B) of the battery-latching device (9) is formed in each of the pair of first side walls (7c, 7d).

4. The adapter according to claim 2, wherein one receiving part (9B) of the battery-latching device (9) is formed in one (7a) of the pair of second side walls (7a, 7b), and one operating part (8A) of the tool-latching device (8) is disposed on each of the pair of first side walls (7c, 7d).

5. The adapter according to claim 2, wherein operation of the operating part (8A) of the tool-latching device (8) detaches the adapter from the body of the power tool.

6. The adapter according to claim 2, wherein operation of the operating part (9A) of the battery pack (6) detaches the adapter from the battery pack (6).

7. An adapter-battery pack assembly comprising an adapter (7) according to any of claims 1 to 6 and a battery pack (6),
wherein the adapter further comprises:
an operating part (8A) for attaching the adapter to and detaching the adapter from the body of the power tool; and
a receiving part (9B) for attaching the adapter to and detaching the adapter from the battery pack (6),
wherein the battery pack (6) comprises:
a battery case (6A) accommodating a battery;
the pair of engaging grooves (6g) formed in the battery case for inserting the pair of rails (7e); and
a battery-side operating part (9A) engageable with the receiving part,
wherein the operating part (8A) of the adapter and the battery-side operating part (9A) are disposed in different positions when viewing the adapter in the insertion direction of the insertion part (7B).

8. The adapter-battery pack assembly according to claim 7, wherein the adapter further comprises a base part (7A) having a pair of first side walls (7c, 7d) disposed in substantially confronting relation with each other and a pair of second side walls (7a, 7b) disposed in substantially confronting relation with each other and connecting the pair of first side walls, wherein the operating part (8A) of the adapter is capable of engaging a receiving part provided in the body of the power tool.

9. A power tool comprising:
a motor;
a battery pack (6) serving as a power source for the motor and comprising a battery case (6A) accomodating a battery, and a battery-side operating part (9A);
an accommodating section that opens outward;
an electric connector disposed adjacent the accommodating section; and
an adapter (7) according to any of claims 1 to 6 that supplies power from the battery pack (6) to the motor, the insertion part (7B) being inserted into the accommodating section and the adapter (7) further comprising: an operating part (8A) for attaching the insertion part in and detaching the insertion part from the accommodating section; and a receiving part (9B) for attaching to and detaching from the battery pack (6), wherein the battery-side operating part (9A) is engageable with the receiving part of the adapter,
wherein the operating part (8A) of the adapter and the battery-side operating part (9A) are disposed in different positions when viewing the adapter in the insertion direction of the insertion part.

10. The power tool according to claim 9, wherein the adapter further comprises a base part (7A) having a pair of first side walls (7c, 7d) disposed in substantially confronting relation with each other and a pair of second side walls (7a, 7b) disposed in substantially confronting relation with each other and connecting the pair of first side walls, wherein the operating part (8A) of the adapter engages a receiving part provided in the body of the power tool, and the receiving part (9B) of the adapter engages the battery-side operating part (9A).

11. The assembly or power tool according to claim 8 or 10, wherein one operating part (8A) of the adapter is disposed on one of the pair of second side walls (7a, 7b), and one receiving part (9B) of the adapter is formed in each of the pair of the first side walls (7c, 7d).

12. The assembly or power tool according to claim 8 or 10, wherein one receiving part (9B) of the adapter is formed in one of the pair of second side walls (7a, 7b), and one operating part (8A) of the adapter is disposed on each of the pair of first side walls (7c, 7d).

13. The assembly or power tool according to claim 7 or 9, wherein operation of the operating part (8A) of the adapter detaches the adapter from the body of the power tool.

14. The assembly or power tool according to claim 7 or 9, wherein operation of the battery-side operating part (9A) detaches the adapter from the battery pack (6).

## Patentansprüche

1. Adapter (7) für ein Elektrowerkzeug, umfassend:
ein Einführteil (7B), das in Einführrichtung vorsteht und in Einführrichtung in einen Körper des Elektrowerkzeugs eingeführt werden kann, wobei das Einführteil (7B) mehrere Anschlüsse (10) zur elektrischen Verbindung mit dem Elektrowerkzeug aufweist;
ein Paar Schienen (7e), die eine Batteriepackung (6) zur Bewegung in Vorwärts-Rückwärts-Richtung im Wesentlichen senkrecht zur Einführrichtung führen, um die Batteriepackung (6) am Adapter (7) zu befestigen, wobei das Paar Schienen (7e) zum Einführen in Eingriffsrillen (6g) der Batteriepackung (6) eingerichtet ist;
eine Werkzeugverriegelungsvorrichtung (8) zum Anbringen am und zum Lösen vom Körper des Elektrowerkzeugs; und
eine Batterieverriegelungsvorrichtung (9, 9B) zum Anbringen an und zum Lösen von der Batteriepackung (6),
**dadurch gekennzeichnet, dass**
die Werkzeugverriegelungsvorrichtung (8) und die Batterieverriegelungsvorrichtung (9, 9B) bei Ansicht des Adapters in Einführrichtung, in der der Adapter (7) in den Körper des Elektrowerkzeugs eingeführt wird, an verschiedenen Positionen angeordnet sind.

2. Adapter nach Anspruch 1 mit einem Sockelteil (7A) mit einem Paar erster Seitenwände (7c, 7d), die im Wesentlichen einander gegenüberliegend angeordnet sind, sowie einem Paar zweiter Seitenwände (7a, 7b), die im Wesentlichen einander gegenüberliegend angeordnet sind und die beiden ersten Seitenwände miteinander verbinden, wobei die Werkzeugverriegelungsvorrichtung (8) ein Bedienungsteil (8A) umfasst, das an einem Aufnahmeteil im Körper des Elektrowerkzeugs angreifen kann, und die Batterieverriegelungsvorrichtung (9) ein Aufnahmeteil (9B) umfasst, an dem ein Bedienungsteil (9A) in der Batteriepackung (6) angreifen kann, wobei das Bedienungsteil der Werkzeugverriegelungsvorrichtung und das Aufnahmeteil der Batterieverriegelungsvorrichtung an verschiedenen Wänden der beiden ersten Seitenwände und der beiden zweiten Seitenwände angeordnet sind.

3. Adapter nach Anspruch 2, wobei ein Bedienungsteil (8A) der Werkzeugverriegelungsvorrichtung (8) an einer (7a) der beiden zweiten Seitenwände (7a, 7b) angeordnet ist und ein Aufnahmeteil (9B) der Batterieverriegelungsvorrichtung (9) in beiden ersten Seitenwänden (7c, 7d) ausgebildet ist.

4. Adapter nach Anspruch 2, wobei ein Aufnahmeteil (9B) der Batterieverriegelungsvorrichtung (9) in einer (7a) der beiden zweiten Seitenwände (7a, 7b) ausgebildet ist und ein Bedienungsteil (8A) der Werkzeugverriegelungsvorrichtung (8) an beiden ersten Seitenwänden (7c, 7d) angeordnet ist.

5. Adapter nach Anspruch 2, wobei eine Betätigung des Bedienungsteils (8A) der Werkzeugverriegelungsvorrichtung (8) den Adapter vom Körper des Elektrowerkzeugs löst.

6. Adapter nach Anspruch 2, wobei eine Betätigung des Bedienungsteils (9A) der Batteriepackung (6) den Adapter von der Batteriepackung (6) löst.

7. Adapter-Batteriepackungsaggregat mit einem Adapter (7) nach einem der Ansprüche 1 bis 6 und einer Batteriepackung (6),
wobei der Adapter außerdem folgendes umfasst:
ein Bedienungsteil (8A) zum Anbringen des Adapters am und zum Lösen des Adapters vom Körper des Elektrowerkzeugs; und
ein Aufnahmeteil (9B) zum Anbringen des Adapters an und zum Lösen des Adapters von der Batteriepackung (6),
wobei die Batteriepackung (6) folgendes umfasst:
ein Batteriegehäuse (6A), das eine Batterie aufnimmt;
ein Paar Eingriffsrillen (6g), die im Batteriegehäuse ausgebildet sind, um das Paar Schienen (7e) einzuführen, und
ein batterieseitiges Bedienungsteil (9A), das am Aufnahmeteil angreifen kann,
wobei das Bedienungsteil (8A) des Adapters und das batterieseitige Bedienungsteil (9A) bei Ansicht des Adapters in Einführrichtung des Einführteils (7B) an verschiedenen Positionen angeordnet sind.

8. Adapter-Batteriepackungsaggregat nach Anspruch 7, wobei der Adapter außerdem ein Sockelteil (7A) mit einem Paar erster Seitenwände (7c, 7d), die im Wesentlichen einander gegenüberliegend angeordnet sind, sowie einem Paar zweiter Seitenwände (7a, 7b), die im Wesentlichen einander gegenüberliegend angeordnet sind und die beiden ersten Seitenwände miteinander verbinden, umfasst, wobei das Bedienungsteil (8A) des Adapters an einem Aufnahmeteil im Körper des Elektrowerkzeugs angreifen kann.

9. Elektrowerkzeug umfassend:
einen Motor;
eine Batteriepackung (6), die als Energiequelle für den Motor dient und ein batterieaufnehmendes Batteriegehäuse (6A) sowie ein batterieseitiges Bedienungsteil (9A) umfasst;
einen Aufnahmeabschnitt, der nach außen offen ist;
einen beim Aufnahmeabschnitt angeordneten elektrischen Verbinder; und
einen Adapter (7) nach einem der Ansprüche 1 bis 6, der Energie von der Batteriepackung (6) zum Motor liefert, wobei das Einführteil (7B) in den Einführabschnitt eingeführt ist und wobei der Adapter (7) außerdem folgendes umfasst: ein Bedienungsteil (8A) zum Anbringen des Einführteils in und zum Lösen des Einführteils aus dem Aufnahmeabschnitt; und ein Aufnahmeteil (9B) zum Anbringen an und zum Lösen von der Batteriepackung (6), wobei das batterieseitige Bedienungsteil (9A) am Eingriffsteil des Adapters angreifen kann,
wobei das Bedienungsteil (8A) des Adapters und das batterieseitige Bedienungsteil (9A) bei Ansicht des Adapters in Einführrichtung des Einführteils an verschiedenen Positionen angeordnet sind.

10. Elektrowerkzeug nach Anspruch 9, wobei der Adapter außerdem ein Sockelteil (7A) mit einem Paar erster Seitenwände (7c, 7d), die im Wesentlichen einander gegenüberliegend angeordnet sind, sowie einem Paar zweiter Seitenwände (7a, 7b), die im Wesentlichen einander gegenüberliegend angeordnet sind und die beiden ersten Seitenwände miteinander verbinden, umfasst, wobei das Bedienungsteil (8A) des Adapters an einem Aufnahmeteil im Körper des Elektrowerkzeugs angreift und das Aufnahmeteil (9B) des Adapters am batterieseitigen Bedienungsteil (9A) angreift.

11. Aggregat oder Elektrowerkzeug nach Anspruch 8 oder 10, wobei ein Bedienungsteil (8A) des Adapters an einer der beiden zweiten Seitenwände (7a, 7b) angeordnet ist und ein Aufnahmeteil (9B) des Adapters in beiden ersten Seitenwänden (7c, 7d) ausgebildet ist.

12. Aggregat oder Elektrowerkzeug nach Anspruch 8 oder 10, wobei ein Aufnahmeteil (9B) des Adapters in einer der beiden zweiten Seitenwände (7a, 7b) ausgebildet ist und ein Bedienungsteil (8A) des Adapters an beiden ersten Seitenwänden (7c, 7d) angeordnet ist.

13. Aggregat oder Elektrowerkzeug nach Anspruch 7 oder 9, wobei eine Betätigung des Bedienungsteils (8A) des Adapters den Adapter vom Körper des Elektrowerkzeug löst.

14. Aggregat oder Elektrowerkzeug nach Anspruch 7 oder 9, wobei eine Betätigung des batterieseitigen Bedienungsteils (9A) den Adapter von der Batteriepackung (6) löst.

## Revendications

1. Adaptateur (7) pour un outil électrique, comprenant :
une partie (7B) d'insertion faisant saillie dans un sens d'insertion et insérable dans un corps de l'outil électrique dans le sens d'insertion, la partie (7B) d'insertion ayant une pluralité de bornes (10) pour une connexion électrique avec l'outil électrique ;
une paire de rails (7e) qui guide un bloc-batterie (6) pour se déplacer dans un sens avant-arrière sensiblement orthogonal au sens d'insertion, pour monter le bloc-batterie (6) sur l'adaptateur (7), la paire de rails (7e) étant configurée pour être insérée dans des rainures (6g) d'engagement du bloc-batterie (6) ;
un dispositif (8) de verrouillage d'outil pour une fixation au et un détachement du corps de l'outil électrique ; et
un dispositif (9, 9B) de verrouillage de batterie pour une fixation au et un détachement du bloc-batterie (6),
**caractérisé en ce que**
le dispositif (8) de verrouillage d'outil et le dispositif (9, 9B) de verrouillage de batterie sont disposés dans des positions différentes lorsque l'adaptateur est vu dans le sens d'insertion, dans lequel l'adaptateur (7) est inséré dans le corps de l'outil électrique.

2. Adaptateur selon la revendication 1, comprenant en outre une partie (7A) de base ayant une paire de premières parois latérales (7c, 7d) disposées sensiblement en relation de vis-à-vis l'une par rapport à l'autre et une paire de deuxièmes parois latérales (7a, 7b) disposées sensiblement en relation de vis-à-vis l'une par rapport à l'autre et connectant la paire de premières parois latérales, dans lequel le dispositif (8) de verrouillage d'outil comprend une partie opérationnelle (8A) apte à engager une partie de réception prévue dans le corps de l'outil électrique, et le dispositif (9) de verrouillage de batterie comprend une partie (9B) de réception avec laquelle une partie opérationnelle (9A) prévue dans le bloc-batterie (6) peut être engagée, la partie opérationnelle du dispositif de verrouillage d'outil et la partie de réception du dispositif de verrouillage de batterie étant disposées sur des parois différentes de la paire de premières parois latérales et de la paire de deuxièmes parois latérales.

3. Adaptateur selon la revendication 2, dans lequel une partie opérationnelle (8A) du dispositif (8) de verrouillage d'outil est disposée sur l'une (7a) de la paire de deuxièmes parois latérales (7a, 7b), et une partie (9B) de réception du dispositif (9) de verrouillage de batterie est formée dans chacune de la paire de premières parois latérales (7c, 7d).

4. Adaptateur selon la revendication 2, dans lequel une partie (9B) de réception du dispositif (9) de verrouillage de batterie est formée dans l'une (7a) de la paire de deuxièmes parois latérales (7a, 7b), et une partie opérationnelle (8A) du dispositif (8) de verrouillage d'outil est disposée sur chacune de la paire de premières parois latérales (7c, 7d).

5. Adaptateur selon la revendication 2, dans lequel une opération de la partie opérationnelle (8A) du dispositif (8) de verrouillage d'outil détache l'adaptateur du corps de l'outil électrique.

6. Adaptateur selon la revendication 2, dans lequel une opération de la partie opérationnelle (9A) du bloc-batterie (6) détache l'adaptateur du bloc-batterie (6).

7. Ensemble adaptateur-bloc-batterie comprenant un adaptateur (7) selon l'une quelconque des revendications 1 à 6 et un bloc-batterie (6),
dans lequel l'adaptateur comprend en outre :
une partie opérationnelle (8A) pour fixer l'adaptateur au et détacher l'adaptateur du corps de l'outil électrique ; et
une partie (9B) de réception pour fixer l'adaptateur au et détacher l'adaptateur du bloc-batterie (6),
dans lequel le bloc-batterie (6) comprend :
un boîtier (6A) de batterie recevant une batterie ;
la paire de rainures (6g) d'engagement formée dans le boîtier de batterie pour insérer la paire de rails (7e) ; et
une partie opérationnelle (9A) de côté batterie pouvant être engagée avec la partie de réception,
dans lequel la partie opérationnelle (8A) de l'adaptateur et la partie opérationnelle (9A) de côté batterie sont disposées dans des positions différentes lorsque l'adaptateur est vu dans le sens d'insertion de la partie (7B) d'insertion.

8. Ensemble adaptateur-bloc-batterie selon la revendication 7, dans lequel l'adaptateur comprend en outre une partie (7A) de base ayant une paire de premières parois latérales (7c, 7d) disposées sensiblement en relation de vis-à-vis l'une par rapport à l'autre et une paire de deuxièmes parois latérales (7a, 7b) disposées sensiblement en relation de vis-à-vis l'une par rapport à l'autre et connectant la paire de premières parois latérales, dans lequel la partie opérationnelle (8A) de l'adaptateur est apte à engager une partie de réception prévue dans le corps de l'outil électrique.

9. Outil électrique comprenant :
un moteur ;
un bloc-batterie (6) servant comme une source d'alimentation électrique pour le moteur et comprenant un boîtier (6A) de batterie recevant une batterie, et une partie opérationnelle (9A) de côté batterie ;
une section de réception qui s'ouvre sur l'extérieur ;
un connecteur électrique disposé adjacent à la section de réception ; et
un adaptateur (7) selon l'une quelconque des revendications 1 à 6 qui fournit l'énergie électrique provenant du bloc-batterie (6) au moteur, la partie (7B) d'insertion étant insérée dans la section de réception et l'adaptateur (7) comprenant en outre : une partie opérationnelle (8A) pour fixer la partie d'insertion dans et détacher la partie d'insertion de la section de réception ; et une partie (9B) de réception pour fixation au et détachement du bloc-batterie (6), dans lequel la partie opérationnelle (9A) de côté batterie peut être engagée avec la partie de réception de l'adaptateur,
dans lequel la partie opérationnelle (8A) de l'adaptateur et la partie opérationnelle (9A) de côté batterie sont disposées dans des positions différentes lorsque l'adaptateur est vu dans le sens d'insertion de la partie d'insertion.

10. Outil électrique selon la revendication 9, dans lequel l'adaptateur comprend en outre une partie (7A) de base ayant une paire de premières parois latérales (7c, 7d) disposées sensiblement en relation de vis-à-vis l'une par rapport à l'autre et une paire de deuxièmes parois latérales (7a, 7b) disposées sensiblement en relation de vis-à-vis l'une par rapport à l'autre et connectant la paire de premières parois latérales, dans lequel la partie opérationnelle (8A) de l'adaptateur engage une partie de réception prévue dans le corps de l'outil électrique, et la partie (9B) de réception de l'adaptateur engage la partie opérationnelle (9A) de côté batterie.

11. Ensemble ou outil électrique selon la revendication 8 ou 10, dans lequel une partie opérationnelle (8A) de l'adaptateur est disposée sur l'une de la paire de deuxièmes parois latérales (7a, 7b), et une partie (9B) de réception de l'adaptateur est formée dans chacune de la paire de premières parois latérales (7c, 7d).

12. Ensemble ou outil électrique selon la revendication 8 ou 10, dans lequel une partie (9B) de réception de l'adaptateur est formée dans l'une de la paire de deuxièmes parois latérales (7a, 7b), et une partie opérationnelle (8A) de l'adaptateur est disposée sur chacune de la paire de premières parois latérales (7c, 7d).

13. Ensemble ou outil électrique selon la revendication 7 ou 9, dans lequel une opération de la partie opérationnelle (8A) de l'adaptateur détache l'adaptateur du corps de l'outil électrique.

14. Ensemble ou outil électrique selon la revendication 7 ou 9, dans lequel une opération de la partie opérationnelle (9A) de côté batterie détache l'adaptateur du bloc-batterie (6).
